# EUROPÄISCHE PATENTSCHRIFT

(11) **EP 2 329 976 B1**
(45) Veröffentlichungstag und Bekanntmachung des Hinweises auf die Patenterteilung: **24.10.2012**
(21) Anmeldenummer: 10014507.7
(22) Anmeldetag: 11.11.2010
(51) Int. Cl.: B60J 5/06, E05D 15/10, E05F 7/00

(54) **Schiebetüre für ein Fahrzeug**
Sliding door for a vehicle
Porte coulissante pour véhicule

(30) Priorität: 07.12.2009 DE 102009057325
(43) Veröffentlichungstag der Anmeldung: 08.06.2011
(73) Patentinhaber: DURA Automotive Body and Glass Systems GmbH, 58840 Plettenberg (DE)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- DE-B3-102008 016 650
- FR-A1- 2 924 150
- JP-A- 60 110 525
- US-B1- 6 206 455

## Beschreibung

Die Erfindung betrifft eine Schiebetüranordnung für ein Fahrzeug, insbesondere für ein Kraftfahrzeug.

Die Schiebetüranordnung umfaßt eine Führungsschiene, einen Gleitschlitten und eine Zentrierung. Der Gleitschlitten ist an der Führungsschiene längsverschieblich gelagert und durch ein Mehrgelenk mit der Fahrzeugkarosserie verbindbar. Die Zentrierung ist an dem dem Mehrgelenk abgewandten Ende der Schiebetüre vorgesehen. Sie ist mit einem karosserieseitigen Gegenlager lösbar verbindbar.

Eine derartige Schiebetüranordnung ist aus der DE 10 2008 016 650 B3 bekannt. Bei dieser Anordnung umfaßt das Mehrgelenk einen Scharnierbügel, der an dem Gleitschlitten und an einem Karosserieflansch drehbar gelagert ist, und einen Steuerhebel, der an dem Gleitschlitten und an einem oder dem Karosserieflansch drehbar gelagert ist. Die vorbekannte Anordnung umfaßt ferner einen ersten Zwischenhebel, der an dem Steuerhebel drehbar gelagert ist, und einen zweiten Zwischenhebel, der an dem ersten Zwischenhebel und an dem Gleitschlitten drehbar gelagert ist. Die Schiebetüre ist an dem dem Mehrgelenk abgewandten Ende durch eine Zentrierung drehbar und längsverschieblich gelagert. Sie ist dort arretierbar. Der Steuerhebel weist eine Verlängerung auf, an dem der erste Zwischenhebel drehbar gelagert ist. An dem Verbindungsgelenk des ersten Zwischenhebels und des zweiten Zwischenhebels ist ein Führungsstift vorgesehen, der in einer an der Schiebetüre vorgesehenen Führungsbahn geführt ist. Die Führungsbahn verläuft relativ zur Führungsschiene geneigt. Hierbei verläuft die Führungsbahn in Richtung von dem Scharnierbügel weg nach außen geneigt.

Eine andere Schiebetüranordnung der eingangs angegebenen Art ist in der EP 2 008 846 A2 beschrieben, auf die ebenfalls ausdrücklich Bezug genommen wird. Hier ist eine Antriebstange vorhanden, die an dem Steuerhebel drehbar gelagert ist. Die Schiebetüre ist an dem dem Mehrgelenk abgewandten Ende durch eine Zentrierung drehbar und längsverschieblich gelagert. Sie ist dort arretierbar. Die Antriebstange ist an der Führungsschiene drehbar gelagert. Der Steuerhebel weist einen Hebelarm auf, an dem die Antriebstange drehbar gelagert ist. An einem Zwischenhebel, der an dem Gleitschlitten drehbar gelagert ist, ist ein Führungsstift vorgesehen, der in einer an der Schiebetüre vorgesehenen Führungsbahn geführt ist.

Aus der prioritätsälteren, nicht vorveröffentlichten DE 10 2008 026 137 A1 ist eine weitere Schiebetüranordnung der eingangs angegebenen Art bekannt. Hier weist der Steuerhebel einen Hebelarm auf, an dem ein Führungsstift vorgesehen ist, der in einer an der Schiebetüre vorgesehenen Führungsbahn geführt ist. Die Führungsbahn verläuft vorzugsweise in Richtung von dem Scharnierbügel weg nach außen geneigt.

Die JP 60110525 A offenbart eine Vorrichtung zur vibrationsarmen Festlegung einer Fahrzeugtür, die ein zapfenartiges Führungselement an der Tür umfaßt, das mit einer Aufnahme an der Fahrzeugkarosserie zusammenwirkt.

Aufgabe der Erfindung ist es, eine verbesserte Schiebetüranordnung der eingangs angegebenen Art vorzuschlagen.

Erfindungsgemäß wird diese Aufgabe durch die kennzeichnenden Merkmale des Anspruchs 1 gelöst. Die Schiebetüranordnung umfaßt einen Dämpfer zum Dämpfen der Bewegung der Schiebetüre beim Verbinden der Zentrierung mit dem Gegenlager. Hierdurch kann die Bewegung der Schiebetüre bei deren Schließen gedämpft werden. Durch die Erfindung können Beschädigungen der Zentrierung und/oder des Gegenlagers beim Schließen der Schiebetüre vermieden werden. Ferner ist es möglich, den Bedienkomfort zu erhöhen.

Der Dämpfer weist einen Bolzen mit einer Anschlagfläche für die Zentrierung auf. Der Bolzen ist vorzugsweise längsverschieblich geführt. Vorteilhaft ist es, wenn der Bolzen in Längsrichtung der Schiebetür längsverschieblich gelagert ist.

Vorteilhafte Weiterbildungen sind in den Unteransprüchen beschrieben.

Der Dämpfer umfaßt vorzugsweise ein Federelement. Ein Dämpfer im Sinne der Erfindung kann also von einem Federelement gebildet werden. Ein geschwindigkeitsabhängiger Dämpfer ist hierfür nicht erforderlich. Es ist allerdings möglich, daß der erfindungsgemäße Dämpfer anstelle des Federelements oder zusätzlich zu diesem einen geschwindigkeitsabhängigen Dämpfer umfaßt.

Das Federelement kann vorgespannt sein.

Vorteilhaft ist es, wenn die Wirkrichtung des Dämpfers in Längsrichtung der Schiebetür verläuft. Dadurch kann die Dämpfungswirkung verbessert werden.

Vorzugsweise ist der Dämpfer in dem Gegenlager angeordnet. Es ist allerdings auch möglich, den Dämpfer in der Schiebetüre vorzusehen.

Eine weitere vorteilhafte Weiterbildung ist dadurch gekennzeichnet, daß die Zentrierung eine Zentrierfläche aufweist, die bei geschlossener Schiebetüre an einer karosseriefesten Gegenfläche anliegt. Hierdurch wird eine zuverlässige Zentrierung der Schiebetüre in der geschlossenen Stillung ermöglicht.

Die Zentrierfläche kann einen Abschnitt aufweisen, der geneigt zur Fahrzeug-Längsrichtung verläuft. Die karosseriefeste Gegenfläche ist vorzugsweise entsprechend ausgebildet. Der geneigt zur Fahrzeug-Längsrichtung verlaufende Abschnitt der Zentrierfläche ist vorzugsweise in Fahrzeugrichtung nach vorne und innen geneigt. Vorteilhaft ist es, wenn der geneigte Abschnitt der Zentrierfläche eben ist.

Eine weitere vorteilhafte Weiterbildung ist **dadurch gekennzeichnet, daß** die Zentrierfläche einen Abschnitt aufweist, der parallel zur Fahrzeug-Längsrichtung verläuft. Die karosseriefeste Gegenfläche ist vorzugsweise entsprechend ausgebildet. Der parallel zur Fahrzeug-Längsrichtung verlaufende Abschnitt liegt vorzugsweise im Anschluß an einen Abschnitt, der geneigt zur Fahrzeug-Längsrichtung verläuft. Er bildet vorzugsweise einen Endabschnitt der Zentrierfläche.

Die Erfindung betrifft ferner ein Fahrzeug, insbesondere ein Kraftfahrzeug, das durch eine oder mehrere erfindungsgemäße Schiebetüranordnungen gekennzeichnet ist.

Ein Ausführungsbeispiel der Erfindung wird nachstehend anhand der beigefügten Zeichnung im einzelnen erläutert. In der Zeichnung zeigt
- Fig. 1: eine vorbekannte Schiebetüre für ein Kraftfahrzeug in der geschlossenen Stellung in einer schematischen Ansicht von oben,
- Fig. 2: die Schiebetüre gemäß Fig. 1 in einer teilweise geöffneten Stellung in einer der Fig. 1 entsprechenden schematischen Ansicht von oben,
- Fig. 3: die Schiebetüre gemäß Fig. 1 und 2 in der vollständig geöffneten Stellung in einer den Fig. 1 und 2 entsprechenden schematischen Ansicht von oben,
- Fig. 4: den vorderen Teil einer erfindungsgemäßen Schiebetüre der in Fig. 1 bis 3 gezeigten Art in einer teilweise geöffneten Stellung in einer schematischen Ansicht von oben,
- Fig. 5: die Schiebetüre gemäß Fig. 4 in der geschlossenen Stellung in einer der Fig. 4 entsprechenden Ansicht von oben.

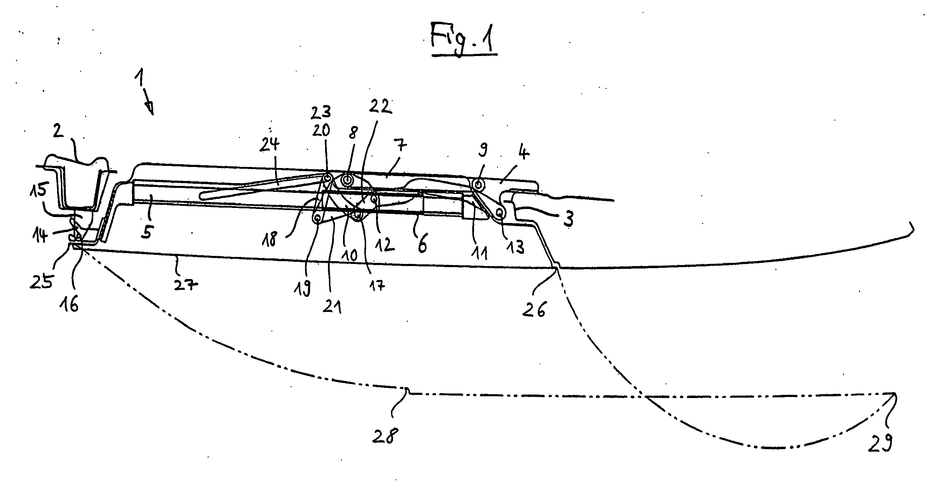

Fig. 1, 2 und 3 zeigen die Schiebetüre 1 nach einem Ausführungsbeispiel der DE 10 2008 016 650 B3. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist. Bei dem hinteren Karosserieteil 3 kann es sich um die C-Säule oder um die A-Säule handeln.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Steuerhebel 11 ist ein erster Zwischenhebel 10 drehbar gelagert, und zwar um die Achse eines Gelenks 17. An dem Gleitschlitten 6 ist ein zweiter Zwischenhebel 18 drehbar gelagert, und zwar um die Achse eines Gelenks 19. Das Gelenk 19 liegt im äußeren Bereich des Gleitschlittens 6. Es liegt im Bereich des vorderen Endes des Gleitschlittens 6. Die von den Gelenken 17, 19 abgewandten Enden der Zwischenhebel 10, 18 sind durch ein Gelenk 20 drehbar miteinander verbunden. Der erste Zwischenhebel 10 und der zweite Zwischenhebel 18 bilden einen Kniehebel. Da das Verbindungsgelenk 20 der Zwischenhebel 10, 18 in Bezug auf das Kraftfahrzeug weiter innen liegt als die Gelenke 17, 19, weist der von den Zwischenhebeln 10, 18 gebildete Kniehebel in Bezug auf das Kraftfahrzeug nach innen.

An dem Gleitschlitten 6 ist eine Gelenkplatte 21 befestigt, die die Gelenke 8, 12 und 19 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1 gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist eine Verlängerung 22 auf, die sich von dem Gelenk 12 nach außen erstreckt. Die Verlängerung 22 verlängert den Steuerhebel 11 längs der Verbindungslinie von dem Gelenk 13 zu dem Gelenk 12 über das Gelenk 12 hinaus. Dabei knickt die Verlängerung 22 gegenüber der Verbindungslinie zwischen den Gelenken 13 und 12, also der Längserstreckung des Steuerhebels 11, geringfügig nach außen bzw. hinten ab. An dem Steuerhebel 11 ist im Bereich des äußeren Endes der Verlängerung 22 das Gelenk 17 für den ersten Zwischenhebel 10 vorgesehen.

An dem Verbindungsgelenk 20 des ersten Zwischenhebels 10 und des zweiten Zwischenhebels 18 ist ein Führungsstift 23 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1 gezeigt ist, liegt der Scharnierbolzen 16 in der U-förmigen Aufnahme 14, und zwar im Bereich von deren Ende. Der Führungsstift 23 befindet sich im Bereich des hinteren, inneren Endes der Führungsbahn 24. Der erste Zwischenhebel 10 weist von dem Gelenk 17 nach vorne und innen. Der zweite Zwischenhebel 18 weist von dem Gelenk 19 nach hinten und innen.

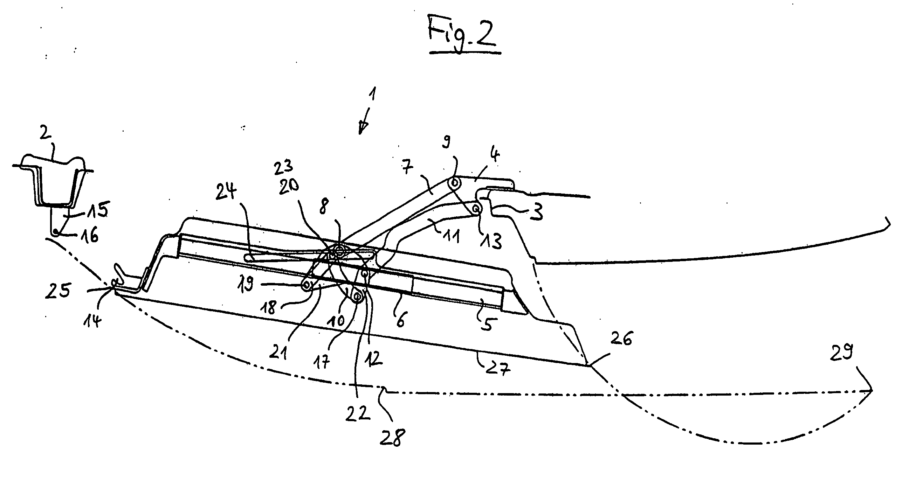

Im Verlauf der Öffnungsbewegung wird die Stellung nach Fig. 2 durchlaufen. Diese Öffnungsbewegung kann **dadurch erzeugt werden, daß** die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

Ohne den Führungsstift 23 könnte der Gleitschlitten 6 auf der Führungsschiene 5 frei verschoben werden. Der in der Führungsbahn 24 geführte Führungsstift 23 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 23 relativ zur Führungsschiene 5 und zum Gleitschlitten 6 nach außen, wodurch der zweite Zwischenhebel 18 im Uhrzeigersinn um das Gelenk 19 verschwenkt wird. Durch die Bewegung des Führungsstifts 23 relativ zum Gleitschlitten 6 nach hinten und außen wird das am anderen Ende des ersten Zwischenhebels 10 befindliche Gelenk 17 ebenfalls nach hinten bewegt, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 und/oder des ersten Zwischenhebels 10 und/oder des zweiten Zwischenhebels 18 um eines oder mehrere der Gelenke 9, 8, 13, 12, 17, 20, 19.

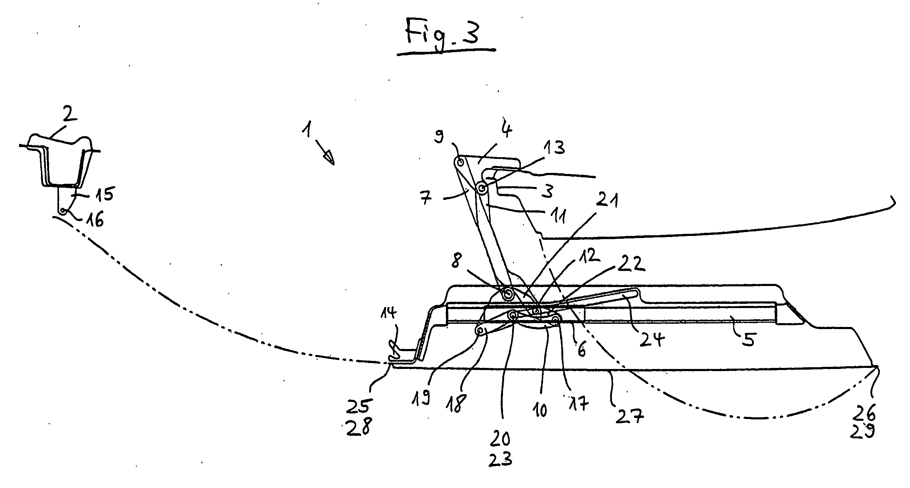

Die vollständig geöffnete Stellung der Schiebetüre 1 ist in Fig. 3 dargestellt. Der erste Zwischenhebel 10 wurde gegenüber der Verlängerung 22 um das Gelenk 17 um etwa 90° im Uhrzeigersinn verschwenkt. Der Führungsstift 23 hat das vordere, geschlossene Ende der Führungsbahn 24 erreicht. Der zweite Zwischenhebel 18 wurde gegenüber dem Gleitschlitten 6 bzw. der Gelenkplatte 21 um das Gelenk 19 um etwa 45° im Uhrzeigersinn verschwenkt. Der Öffnungswinkel der Zwischenhebel 10, 18 an dem Gelenk 20 wurde von etwa 30° auf etwa 150° vergrößert. Der Steuerhebel 11 und der Scharnierbügel 7 wurden um einen Winkel von 120° entgegen dem Uhrzeigersinn um die Gelenke 13 und 9 verschwenkt.

Wenn die Schiebetüre 1 geschlossen werden soll, werden die beschriebenen Stellungen in umgekehrter Reihenfolge durchlaufen. Die Schließbewegung der Schiebetüre 1 kann **dadurch bewirkt werden, daß** die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 23 übertragen und von dort über den ersten Zwischenhebel 10 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1, 2 und 3 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

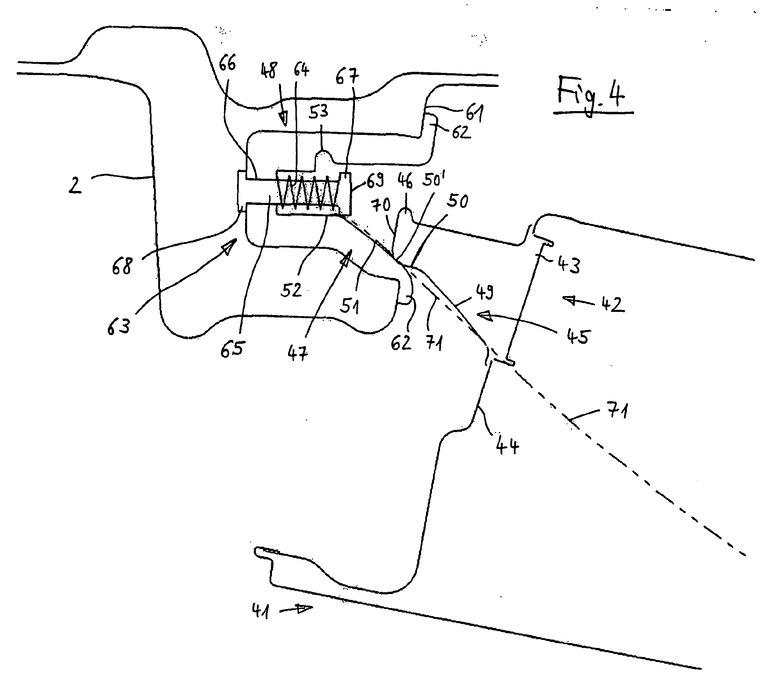

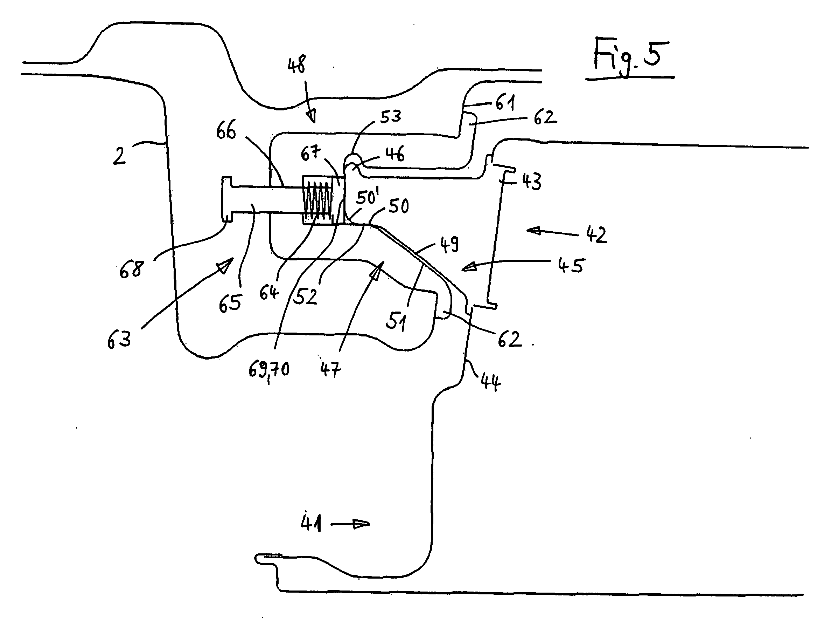

Fig. 4 und 5 zeigen den vorderen Teil einer erfindungsgemäßen Schiebetüre 41 mit einer Zentrierung 42, die anders als bei der Ausführungsform nach Fig. 1 bis 3 ausgebildet ist. Die Zentrierung 42 ist am hinteren Ende der Schiebetüre 41 befestigt. Sie umfaßt einen Befestigungsflansch 43, der an einem vorderen Abschlußblech 44 der Schiebetüre 41 befestigt ist, und eine Zentrierfläche 45.

Die Zentrierfläche 45 liegt bei geschlossener Schiebetüre an einer karosseriefesten Gegenfläche 47 an. Die karosseriefeste Gegenfläche 47 ist an einem karosserieseitigen Gegenlager 48 vorgesehen, das an der B-Säule 2 befestigt ist. Das Gegenlager 48 ist topfförmig ausgestaltet. Es befindet sich in einer Öffnung in einem der Schiebetüre 41 zugewandten Blech 61 der B-Säule 2. Das topfförmige Gegenlager 48 ist in diese Öffnung eingesetzt. Äußere Ränder 62 des Gegenlagers 48 liegen dabei an den die Öffnung umgebenden Rändern des Blechs 61 an. Das Gegenlager 48 befindet sich innerhalb der B-Säule 2.

Die Zentrierfläche 45 der Zentrierung 42 weist einen Abschnitt 49 auf, der geneigt zur Fahrzeug-Längsrichtung verläuft. Der Abschnitt 49 ist in Fahrzeugrichtung nach vorne und innen geneigt. Er ist eben.

Die Zentrierfläche 45 weist ferner einen Abschnitt 50 auf, der parallel zur Fahrzeug-Längsrichtung verläuft. Der parallele Abschnitt 50 schließt sich an den geneigten Abschnitt 49 an. Er bildet den Endabschnitt der Zentrierfläche 45. Der parallele Abschnitt 50 liegt in Fahrzeug-Längsrichtung vor dem geneigten Abschnitt 49. Er weist an seinem in Fahrzeug-Längsrichtung vorderen Ende eine Abrundung 50' auf.

Die karosseriefeste Gegenfläche 47 ist in entsprechender Weise ausgebildet. Sie umfaßt einen ebenen, geneigten Abschnitt 51 und einen daran anschließenden parallelen Abschnitt 52. Im geschlossenen Zustand der Schiebetüre liegt der geneigte Abschnitt 49 an dem geneigten Abschnitt 51 an, und der parallele Abschnitt 50 liegt an dem parallelen Abschnitt 52 an. Auf diese Weise wird eine zuverlässige Zentrierung der Schiebetüre 41 in der geschlossenen Stellung der Schiebetüre ermöglicht.

In dem Gegenlager 48 ist ein Dämpfer 63 vorgesehen. Der Dämpfer 63 umfaßt ein Federelement 64, nämlich eine Druckfeder, und einen Bolzen 65, der in einer Führung 66 längsverschieblich geführt ist. Die Führung 66 befindet sich im Boden des topfförmigen Gegenlagers 48. Sie verläuft in Längsrichtung der Schiebetür, die mit der Längsrichtung des Fahrzeugs identisch ist. Die Druckfeder 64 stützt sich am Boden des topfförmigen Gegenlagers 48 und an einem Bund 67 am hinteren Ende des Bolzens 65 ab. Durch die Druckfeder 64 wird der Bolzen 65 in Richtung nach hinten vorbelastet. Sein Weg wird durch einen Bund 68 am vorderen Ende des Bolzens 65 begrenzt, der an der Außenfläche des Bodens des topfförmigen Gegenlagers 48 anliegt. In dieser Stellung, die in Fig. 4 gezeigt ist, ist die Druckfeder 64 vorgespannt. Die äußere, in Fahrzeugrichtung hintere Endfläche des Bundes 67 bildet eine Anschlagfläche 69 für die Zentrierung 42.

Fig. 4 zeigt den vorderen Teil der Schiebetüre 41 in einer teilweise geöffneten Stellung vor dem Schließen der Schiebetüre 41. Die Abrundung 50' am vorderen Ende des parallelen Abschnitts 50 der Zentrierfläche 45 der Zentrierung 42 gelangt mit dem äußeren, hinteren Ende des geneigten Abschnitts 51 der karosseriefesten Gegenfläche 47 in Anlage und gleitet anschließend den geneigten Abschnitt 51 nach vorne und innen entlang. Bevor die Abrundung 50' am vorderen Ende des parallelen Abschnitts 50 das vordere innere Ende des geneigten Abschnitts 51 erreicht hat, gelangt die vordere Endfläche 70 der Zentrierung 42 mit der Anschlagfläche 69 des Bolzens 65 in Anlage. Während der weiteren Bewegung der Zentrierung 42 nach vorne wird der Bolzen 65 gegen die Kraft der Druckfeder 64 nach vorne gedrückt. Die Druckfeder 64 dämpft auf diese Weise die Schiebetür 41 beim Verbinden der Zentrierung 42 mit dem Gegenlager 48. Die Schließbewegung der Schiebetüre 41 wird also gedämpft.

Wenn die Abrundung 50' am vorderen Ende des parallelen Abschnitts 50 der Zentrierfläche 45 der Zentrierung 42 das vordere innere Ende des geneigten Abschnitts 51 der karosseriefesten Gegenfläche 47 des Karosserieflansches 48 erreicht hat, schließt sich eine ausschließliche Bewegung nach vorne an, die beendet ist, wenn der geneigte Abschnitt 49 vollständig an dem geneigten Abschnitt 51 anliegt, wie in Fig. 5 gezeigt. In dieser Stellung ist die Schiebetüre 41 vollständig und zuverlässig verrastet. Auch während dieser ausschließlich nach vorne gerichteten Bewegung wird die Druckfeder 64 weiter zusammengedrückt. Mit zunehmender Schließung der Schiebetüre 41 wird die der Schließbewegung entgegengesetzte Kraft der Druckfeder 64 größer, so daß eine zunehmend bessere Dämpfungswirkung eintritt.

Beim Öffnen der Schiebetüre 41 wird der umgekehrte Weg durchlaufen. Die Öffnungsbewegung wird durch die Druckfeder 64 unterstützt. Bei der Öffnungsbewegung wird die Zentrierung 42 aus der in Fig. 5 gezeigten Stellung nach hinten und außen bewegt. Aufgrund des parallelen Abschnitts 50 der Zentrierfläche 45 der Zentrierung 42 und des zugehörigen parallelen Abschnitts 52 der karosseriefesten Gegenfläche 47 des Karosserieflansches 48 bewegt sich die Zentrierung 42 zunächst ausschließlich nach hinten. Danach, wenn die Länge des parallelen Abschnitts 50 überwunden ist, wird durch die geneigten Abschnitte 49, 51 eine Bewegung nach außen überlagert. Die Zentrierung 42 bewegt sich dann gleichmäßig nach hinten und außen. Während dieser Bewegung gleitet die Abrundung 50' am vorderen Ende des parallelen Abschnitts 50 der Zentrierfläche 45 auf dem geneigten Abschnitt 51 der karosseriefesten Gegenfläche 47 nach hinten und außen. Das Ende dieser Gleitbewegung ist in Fig. 5 dargestellt, in der sich die Abrundung 50' am vorderen Ende des parallelen Abschnitts 50 am hinteren, äußeren Ende des geneigten Abschnitts 51 befindet. Danach hebt die Zentrierung 42 von der karosseriefesten Gegenfläche 47 ab. Die Abrundung 50' folgt der Verlaufskurve 71.

An der Zentrierung 42 ist ein Fanghaken 46 vorgesehen. Der Fanghaken 46 befindet sich am vorderen Ende der Zentrierung 42. Er liegt dem parallelen Abschnitt 50 der Zentrierfläche 45 gegenüber. Der Fanghaken 46 ist in Fahrzeug-Längsrichtung nach innen gerichtet. Bei geschlossener Schiebetüre liegt ihm ein karosseriefestes Gegenstück 53 gegenüber. Das Gegenstück 53 ist an dem Gegenlager 48 vorgesehen. Es liegt in Fahrzeug-Längsrichtung bei geschlossener Schiebetüre auf gleicher Höhe wie der Fanghaken 46 und innerhalb des Fanghakens 46. Wenn bei einem Seitenaufprall die Schiebetüre 41 nach innen verformt wird, gelangt der Fanghaken 46 mit dem karosseriefesten Gegenstück 53 in Anlage, wodurch eine Verankerung für die Schiebetüre 41 gebildet wird, die einer Verformung der Schiebetüre 41 nach innen einen Widerstand entgegensetzt.

## Patentansprüche

1. Schiebetüranordnung für ein Fahrzeug mit einer Führungsschiene (5), mit einem Gleitschlitten (6), der an der Führungsschiene (5) längsverschieblich gelagert ist und der durch ein Mehrgelenk (7, 11, 4) mit der Fahrzeugkarosserie verbindbar ist, und mit einer Zentrierung (42) an dem dem Mehrgelenk (7, 11, 4) abgewandten Ende der Schiebetür, die mit einem karosserieseitigen Gegenlager (48) lösbar verbindbar ist,
**gekennzeichnet durch**
einen Dämpfer (63) zum Dämpfen der Bewegung der Schiebetür (41) beim Verbinden der Zentrierung (42) mit dem Gegenlager (48), wobei der Dämpfer (63) einen Bolzen (65) mit einer Anschlagfläche (69) für die Zentrierung (42) aufweist.

2. Schiebetüranordnung nach Anspruch 1, **dadurch gekennzeichnet, daß** der Dämpfer (63) ein Federelement (64) umfaßt.

3. Schiebetüranordnung nach Anspruch 2, **dadurch gekennzeichnet, daß** das Federelement (64) vorgespannt ist.

4. Schiebetüranordnung nach einem der vorhergehenden Ansprüche, **dadurch gekennzeichnet, daß** die Wirkrichtung des Dämpfers (63) in Längsrichtung der Schiebetür (41) verläuft.

5. Schiebetüranordnung nach einem der vorhergehenden Ansprüche, **dadurch gekennzeichnet, daß** der Dämpfer (63) in dem Gegenlager (48) angeordnet ist.

6. Schiebetüranordnung nach einem der vorhergehenden Ansprüche, **dadurch gekennzeichnet, daß** die Zentrierung (42) eine Zentrierfläche (45) aufweist, die bei geschlossener Schiebetüre an einer karosseriefesten Gegenfläche anliegt.

7. Schiebetüranordnung nach Anspruch 6, **dadurch gekennzeichnet, daß** die Zentrierfläche (45) einen Abschnitt (49) aufweist, der geneigt zur Fahrzeug-Längsrichtung verläuft.

8. Schiebetüranordnung nach Anspruch 6 oder 7, **dadurch gekennzeichnet, daß** die Zentrierfläche (45) einen Abschnitt (50) aufweist, der parallel zur Fahrzeug-Längsrichtung verläuft.

9. Fahrzeug, insbesondere Kraftfahrzeug, **gekennzeichnet durch** eine oder mehrere Schiebetüranordnungen nach einem der Ansprüche 1 bis 8.

## Claims

1. A sliding door assembly for a vehicle having a guide rail (5), having a sliding carriage (6) which is longitudinally displaceably journalled at the guide rail (5) and which can be connected to the vehicle body by a multijoint (7, 11, 4) and having a centering (42) at the end of the sliding door remote from the multijoint (7, 11, 4) which is releasably connectable to a counter-bearing (48) at the body side,
**characterized by**
a damper (63) for damping the movement of the sliding door (41) on the connection of the centering (42) to the counter-bearing (48), wherein the damper (63) has a pin (65) having an abutment surface (69) for the centering (42).

2. A sliding door assembly in accordance with claim 1, **characterized in that** the damper (63) includes a spring element (64).

3. A sliding door assembly in accordance with claim 2, **characterized in that** the spring element (64) is prestressed.

4. A sliding door assembly in accordance with one of the preceding claims, **characterized in that** the direction of action of the damper (63) extends in the longitudinal direction of the sliding door (41).

5. A sliding door assembly in accordance with one of the preceding claims, **characterized in that** the damper (63) is arranged in the counter-bearing (48).

6. A sliding door assembly in accordance with one of the preceding claims, **characterized in that** the centering (42) has a centering surface (45) which contacts a counter-surface fixed to the body with a closed sliding door.

7. A sliding door assembly in accordance with claim 6, **characterized in that** the centering surface (45) has a section (49) which extends in an inclined manner to the longitudinal direction of the vehicle.

8. A sliding door assembly in accordance with claim either of claims 6 or 7, **characterized in that** the centering surface (45) has a section (50) which extends parallel to the longitudinal direction of the vehicle.

9. A vehicle, in particular a motor vehicle, **characterized by** one or more sliding door assemblies in accordance with one of the claims 1 to 8.

## Revendications

1. Agencement de porte coulissante pour un véhicule avec un rail de guidage (5), avec un chariot coulissant (6) qui est logé d'une manière déplaçable longitudinalement au rail de guidage (5) et qui peut être relié par une articulation multiple (7, 11, 4) à la carrosserie du véhicule, et avec un centrage (42) à l'extrémité de la porte coulissante éloignée de l'articulation multiple (7, 11, 4), qui peut être relié amoviblement à un contre-palier (48) côté carrosserie, **caractérisé par** un amortisseur (63) pour amortir le déplacement de la porte coulissante (41) lors de l'assemblage du centrage (42) avec le contre-palier (48), où l'amortisseur (63) présente un boulon (65) avec une face de butée (69) pour le centrage (42).

2. Agencement de porte coulissante selon la revendication 1, **caractérisé en ce que** l'amortisseur (63) comprend un élément de ressort (64).

3. Agencement de porte coulissante selon la revendication 2, **caractérisé en ce que** l'élément de ressort (64) est précontraint.

4. Agencement de porte coulissante selon l'une des revendications précédentes, **caractérisé en ce que** la direction d'action de l'amortisseur (63) s'étend dans la direction longitudinale de la porte coulissante (41).

5. Agencement de porte coulissante selon l'une des revendications précédentes, **caractérisé en ce que** l'amortisseur (63) est disposé dans le contre-palier (48).

6. Agencement de porte coulissante selon l'une des revendications précédentes, **caractérisé en ce que** le centrage (42) présente une face de centrage (45) qui, lorsque la porte coulissante est fermée, s'applique à une contre-face solidaire de la carrosserie.

7. Agencement de porte coulissante selon la revendication 6, **caractérisé en ce que** la face de centrage (45) présente une section (49) qui est inclinée relativement à la direction longitudinale du véhicule.

8. Agencement de porte coulissante selon la revendication 6 ou 7, **caractérisé en ce que** la face de centrage (45) présente une section (50) qui s'étend parallèlement à la direction longitudinale du véhicule.

9. Véhicule, en particulier véhicule automobile, **caractérisé par** un ou plusieurs agencements de porte coulissante selon l'une des revendications 1 à 8.
